# EUROPEAN PATENT SPECIFICATION

(11) **EP 4 533 412 B1**
(45) Date of publication and mention of the grant of the patent: **04.11.2026**
(21) Application number: 23723960.3
(22) Date of filing: 09.05.2023
(51) Int. Cl.: G06V 10/764, G06V 30/19

(54) **AUTOMATED EQUIPMENT INSTALLATION VERIFICATION**
AUTOMATISIERTE AUSRÜSTUNGSINSTALLATIONSPRÜFUNG
VÉRIFICATION AUTOMATIQUE D'INSTALLATION D'ÉQUIPEMENT

(30) Priority: 30.05.2022 EP 22176096
(43) Date of publication of application: 09.04.2025
(73) Proprietor: British Telecommunications public limited company, London, Greater London E1 8EE (GB)
(72) Inventor: CONWAY, Anthony, London Greater London E1 8EE (GB); SAN CAYO VILLAR, Nuria, London Greater London E1 8EE (GB); LEON GARZA, Hugo, London Greater London E1 8EE (GB); DI CAIRANO-GILFEDDER, Carla, London Greater London E1 8EE (GB)
(74) Representative: British Telecommunications public limited company Intellectual Property Department
(86) International application number: PCT/EP2023/062294
(87) International publication number: WO 2023/232403

(56) References cited:
- EP-A2- 0 093 422
- CN-A- 111 024 147
- CN-A- 111 563 519
- DE MELLO ALEXANDRE R ET AL: "Inspecting surface mounted devices using k nearest neighbor and Multilayer Perceptron", 2015 IEEE 24TH INTERNATIONAL SYMPOSIUM ON INDUSTRIAL ELECTRONICS (ISIE), IEEE, 3 June 2015 (2015-06-03), pages 950 - 955, XP033223056, DOI: 10.1109/ISIE.2015.7281599

## Description

The present invention relates to the installation of equipment and the automated verification of the efficacy of such installation.

The installation of physical equipment by installation operatives such as engineers, service personnel and installers are susceptible to inconsistencies of approach, procedure and/or inconsistent application of quality assurance measures or checks. Consequently, equipment can be installed with varying degrees of correctness ranging from entirely correct to entirely incorrect with a continuous spectrum of measures of correctness therebetween, any of which may be objectively defined or measured according to a scale, rating or other scheme for measuring or verifying correctness of installation. In particular, while installation procedures may have been substantially followed correctly by an operative, particular characteristics of the installation process, the installed equipment itself as handled or treated by an operative, other equipment or resources associated with the equipment or an environment of installation of the equipment may render the installed equipment susceptible to a subsequently curtailed lifespan, a curtailed or reduced efficacy or performance, a susceptibility to progressive or sudden degradation in utility, suitability or performance, or other such detriments. Notably, such detriments may not be readily identified is the equipment can be seen to be immediately operable on installation, especially where such detriments relate to a failure to achieve a potential performance or a progressive decline in performance of efficacy over time.

Such equipment installation is common in utilities industries, such as industries that have transmission and distribution networks for the transport, provision, communication or conveyance of a utility such as power (including electricity), gas (including natural gas), liquid (including water), sewage and communications facilities (including fixed-line, wireless and/or mobile telephony and network connections such as broadband services). Such networks are comprised of network infrastructure including means and mechanisms for the transmission of the utility. Such infrastructure can include equipment that is deployed as part of the provision of the utility, including equipment deployed at utility provider premises, business or consumer premises, and at locations therebetween.

Document CN111024147 provides a component mounting detection method based on CNNs, which comprises the following steps: (a) acquiring sampling data at a preset frequency, wherein the sampling data correspond to various installation states of an element to be tested; (b) segmenting the sampling data according to a preset rule to filter out noise signals; (c) manually classifying the segmented sampling data to obtain data to be imported; (d) importing the data to be imported into a convolutional neural network architecture for model training, and forming a corresponding model file; (e) downloading the trained model file to a detection engine; and (f) acquiring the sampling data again, and returning a corresponding detection result by the detection engine according to the acquired sampling data and the model file. The installation detection method can realize high-performance quick identification and timely response. The invention also provides a component mounting detection device based on the CNNs, electronic equipment and a storage medium.

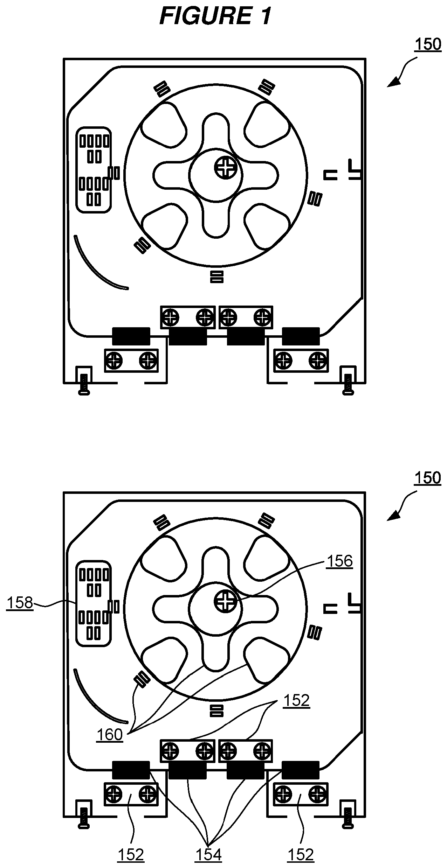

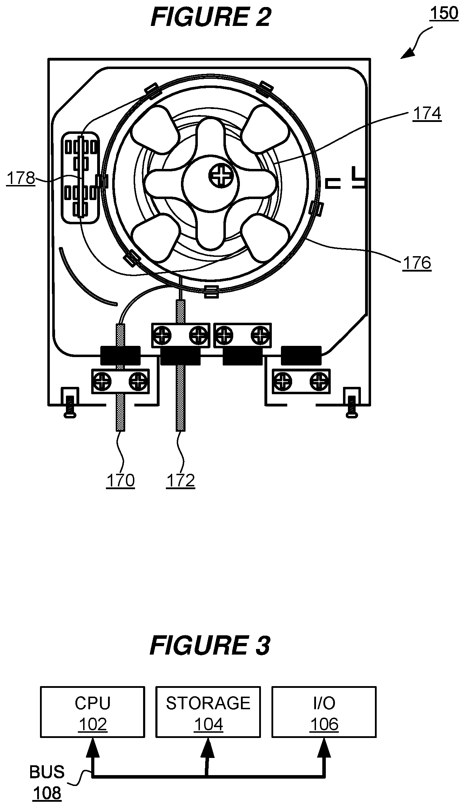

For example, the telecommunications industry provides network communications services to businesses and consumers including services such as fibre optic network connections, the provision of which involves the installation of equipment. One such exemplary item of equipment is a customer splice point (CSP) at which fibre optic cables can be spliced for provision of fibre optic services to a customer's premises. Figure 1 is an exemplary schematic illustration of one such CSP 150 depicted with and without reference numerals for clarity. The CSP 150 of Figure 1 is conventional as will be understood by those skilled in the art and includes a number of parts that are affected by an operative as part of its installation. Such parts include: rubber grommets 154 for protecting against moisture ingress; cable clamps 152 for securing cables entering and exiting the CSP 150; fibre coil guides 160 around which fibre can be coiled; a fibre cradle 158 through which a splice may be effected; a securing screw 156; and numerous other features not specifically labelled here. On installation, these and other parts of the CSP 150 will be used, configured, modified and/or adjusted as part of a deployment of the CSP 150. Figure 2 is an exemplary schematic illustration of the CSP 150 of Figure 1 showing an exemplary installation of fibre cable to effect a splice. Cables 170, 172 enter the CSP 150 with one cable wound around the exterior of the fibre cradle 158 depicted at 176, and other cable wound around the interior of the fibre cradle 158 depicted at 174. For example, a splice may be effected at the fibre cradle 158 depicted at 178. Notably, the equipment in Figure 2 can include both the CSP 150 and the cable installation, such that the equipment is the composite of a component such as the CSP 150 and other elements such as cabling or the like to be installed in, with or for such a component. Accordingly, equipment is not to be read as limited to individual components. Features of the installation that may vary by operative or circumstance include: the precise location, torque and suitability of securing screw 158; the nature of the coiling of fibre cable whether internally 174 or externally 176 and, in particular, a potential for cable kinking; a presence or absence of rubber grommets 154; a proper seating of rubber grommets 154 in the casing; the presence or absence of cable clamps 152, the tightening of cable clamps 152 to an appropriate torque; the proper seating of fibre optic cables in the fibre cradle 158; and other such features as will be apparent to those skilled in the art. Such variability in the installation and characteristics of the installation of equipment such as the CSP 150 lead to potential early failure, shortened life, reduced performance or other detriments as set out above.

Accordingly, there is a challenge to address inconsistent installation of equipment to ensure efficacious and suitably performing equipment on installation.

The present invention accordingly provides, in a first aspect, an automated equipment installation verification system to automatically verify correctness of an installation of an item of installed equipment, the system comprising: a logic unit that executes a rule engine to apply at least one rule to an output of each of a plurality of classifiers to generate an indication of a degree of correctness of the installation of the equipment, each of the classifiers being trained to determine a degree of correctness of a configuration of at least part of the equipment based on image data, the image data including a representation of the equipment and being segmented such that each segment of the image data corresponds to a part of the installed equipment.

In one arrangement, the rule engine further identifies at least one part of the equipment for which the degree of correctness of the configuration of the part is below a threshold degree of correctness.

In one arrangement, the system further comprises a communications interface, wherein the degree of correctness is communicated via the communications interface to inform an operative.

In one arrangement, the system further comprises a communications interface, wherein the at least one part of the equipment for which the degree of correctness of the configuration of the part is below the threshold degree of correctness is communicated via the communications interface.

In one arrangement, the logic unit further compares a configuration of each of the at least one part of the equipment for which the degree of correctness of the configuration of the part is below the threshold degree of correctness, and a predefined model configuration of the part, the comparison identifying differences therebetween.

In one arrangement, the system further comprises a communications interface, wherein identified differences are communicated via the communications interface.

In one arrangement, the system comprises at least one optical sensor generating the image data including the representation of the installed equipment and the logic unit further communicates the output of each of the classifiers to the rule engine to generate the indication of a degree of correctness of the installation of the equipment.

In one arrangement, the rule engine further identifies at least one part of the equipment for which the degree of correctness of the configuration of the part is below a threshold degree of correctness.

In one arrangement, the system further comprises a communications interface, wherein the degree of correctness is communicated via the communications interface to inform an operative.

In one arrangement, the system further comprises a communications interface, wherein the at least one part of the equipment for which the degree of correctness of the configuration of the part is below the threshold degree of correctness is communicated via the communications interface.

In one arrangement, the logic unit further compares a configuration of each of the at least one part of the equipment for which the degree of correctness of the configuration of the part is below the threshold degree of correctness, and a predefined model configuration of the part, the comparison identifying differences therebetween.

In one arrangement, the system further comprises a communications interface, wherein identified differences are communicated via the communications interface.

In one arrangement, the logic unit includes one or more computer systems.

In one arrangement, the image data includes one or more of: a digital image; video; and a three-dimensional scan.

The present invention accordingly provides, in a second aspect, a method to automatically verify correctness of an installation of an item of installed equipment, the method comprising: executing a rule engine to apply at least one rule to an output of each of a plurality of classifiers to generate an indication of a degree of correctness of the installation of the equipment, each of the classifiers being trained to determine a degree of correctness of a configuration of at least part of the equipment based on image data, the image data including a representation of the equipment and being segmented such that each segment of the image data corresponds to a part of the installed equipment.

In one arrangement, the method to verify correctness of an installation of an item of installed equipment comprises receiving the image data including the representation of the installed equipment; and executing the plurality of classifiers.

The present invention accordingly provides, in a third aspect, a computer program element comprising computer program code to, when loaded into a computer system and executed thereon, cause the computer to perform the steps of a method described above.

Exemplary arrangements of the present invention will now be described, by way of example only, with reference to the accompanying drawings, in which:
Figure 1 depicts an exemplary customer splice point as known in the art;
Figure 2 is an exemplary schematic illustration of the customer splice point of Figure 1 showing an exemplary installation of fibre cable to effect a splice;
Figure 3 is a block diagram a computer system suitable for the operation of embodiments of the present invention;
Figure 4 is a component diagram of an automated equipment installation verification system to automatically verify correctness of an installation of an item of installed equipment in accordance with an exemplary arrangement of the present invention;
Figure 5 depicts a segmented image of a customer splice point in accordance with an exemplary arrangement of the present invention;
Figure 6 depicts an alternative segmented image of a customer splice point in accordance with an exemplary arrangement of the present invention;
Figure 7 is a component diagram of an automated equipment installation verification system to automatically verify correctness of an installation of an item of installed equipment in accordance with an exemplary arrangement of the present invention;
Figure 8 is a flowchart of an exemplary method of the logic unit of the server of Figure 7 in accordance with an exemplary arrangement of the present invention;
Figure 9 is a flowchart of an exemplary method of the logic unit of the client of Figure 10 in accordance with an exemplary arrangement of the present invention;
Figure 10 is a component diagram of an automated equipment installation verification system to automatically verify correctness of each of a sequence of installation steps for the installation of an item of equipment in accordance with an exemplary arrangement of the present invention;
Figure 11 is a flowchart of an exemplary method of the logic unit of Figure 10 in accordance with an exemplary arrangement of the present invention;
Figure 12 is a component diagram of an automated equipment installation verification system to automatically verify correctness of installation actions of an operative installing an item of equipment in accordance with an exemplary arrangement of the present invention;
Figure 13 is a component diagram of an automated equipment installation verification system to automatically verify correctness of installation actions of an operative installing an item of equipment in accordance with an exemplary arrangement of the present invention;
Figure 14 is a flowchart of an exemplary method of the logic unit of the server of Figure 13 in accordance with an exemplary arrangement of the present invention; and
Figure 15 is a flowchart of an exemplary method of the logic unit of the client of Figure 13 in accordance with an exemplary arrangement of the present invention.

Figure 3 is a block diagram of a computer system suitable for the operation of embodiments of the present invention. In particular, logic units as herein described may be implemented as physical or virtual generalised computer systems or dedicated or bespoke processing systems, such as systems configured to execute program code whether software or hardware-encoded such as via stored instructions, firmware or a combination thereof. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Arrangements, systems and methods in accordance with the present invention provide for the automated verification of an installation of equipment, such as - but in no way limited to - a CSP 150 such as is described above, by an operative such as an installation operative or engineer. The installation verification is performed based on one or more items of image data each including at least one representation of the installed equipment, such as image data obtained via optical sensors such as one or more of: a camera; a 3D scanner; a light detecting and ranging (LiDAR) sensor; or other optical sensor capable of generating such image data. The image data is segmented such that each segment of the image data corresponds to a part of the installed equipment. Such segmentation may include segmenting the image data into a plurality of segments of similar or identical size and shape or regular parts so as to divide the image into parts. Alternatively, such segmentation may include identifying specific parts of the image data corresponding to specific parts of the installed equipment, whether by standardised definition of segments at locations in the image data, or by the application of image recognition, object recognition, image normalisation or image detection techniques, any or all of which may employ machine learning techniques, to identify a location in an image of depictions of individual parts of the installed equipment in the image data to define segments associated with such parts, noting that any such segments may overlap. The segmented image is processed by a plurality of classifiers such as machine learning classifiers including, for example, inter alia, one or more of: a decision tree classifier; a naive Bayes classifier; a K-nearest neighbour classifier; a support vector machine; and an artificial neural network. The classifiers are trained to determine a degree of correctness of a configuration of at least one part of the installed equipment based on the segmented image data. For example, an artificial neural network classifier can be trained using a supervised method to classify a segment of image data between two or more classes of correctness based on training data including a corresponding segment of image data for each of a set of exemplary articles of equipment, each such exemplary article being associated with an indication of correctness from the two or more classes of correctness. Thus, in use, the classifiers applied to segmented image data for installed equipment classifies segments of the image data corresponding to one or more parts of the installed equipment to a degree of correctness, so determining a degree of correctness of installation of the respective parts of the installed equipment. Subsequently, the output of the classifiers is processed by a rule engine such as a software, firmware or hardware rule engine operating with a logic unit to apply at least one rule to the classifier output. On the basis of the at least one rule, an indication of a degree of correctness of the installed equipment is generated. Thus, the degree of correctness of the installed equipment is determined based on the indications of degrees of correctness for each of the at least one part of the equipment determined by the classifiers. The degree of correctness of the installed equipment can be a continuous measure of degree, such as a numeric scale, a Boolean indication of correctness such as "true" or "false" indication, an enumerated set of classes of correctness, or other suitable indications of a degree of correctness. Rules applied by the rule engine can include: threshold-based rules such as rules for combining degrees of correctness for each of a plurality of parts of the installed equipment determined by the classifiers, such as by summation, combination or other aggregation, to compare with one or more thresholds to determine a degree of correctness of the installed equipment; a logical rule such as a series of one or more conditions of a decision tree operable on the basis of the degree of correctness of each of the at least one part of the installed equipment to determine an appropriate degree of correctness for the installed equipment; and other suitable rules. The degree of correctness of the installed equipment determined with the rule engine serves to verify the correctness of the installation of the installed equipment and in this way the installation is automatically verified.

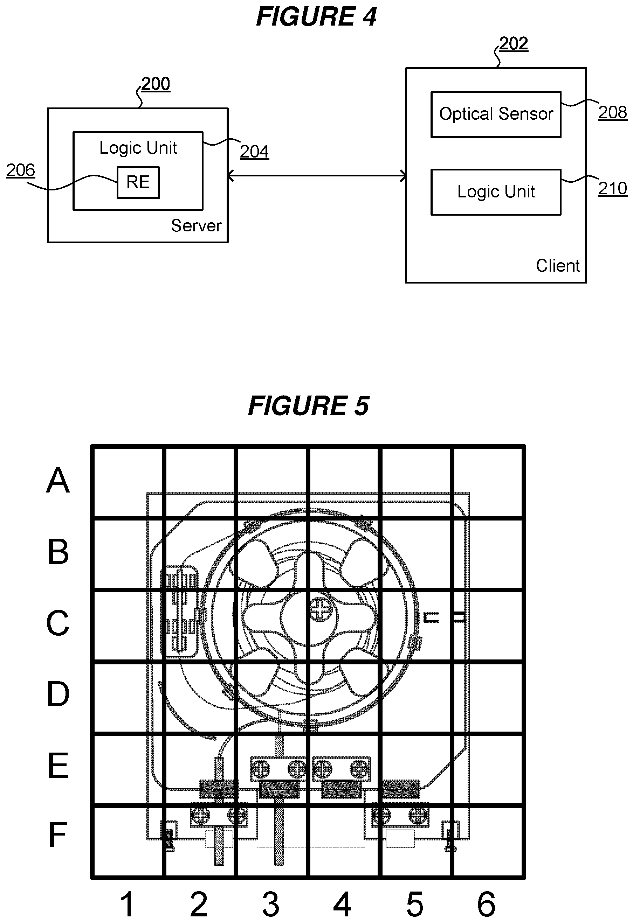

Figure 4 is a component diagram of an automated equipment installation verification system to automatically verify correctness of an installation of an item of installed equipment in accordance with an exemplary arrangement of the present invention. The system is depicted as a client/server system having a server device 200 and a client device 202. It will be appreciated that such a separation of the system into multiple devices is purely exemplary and a singular or multiplicity of devices may be used.

The client device 202 includes or is constituted by a logic unit 210 such as a general purpose or dedicated computing or processing device. The client device 202 further includes, or has associated, at least one optical sensor 208 for generating image data including a representation of installed equipment. For example, the optical sensor 208 can be a camera or LiDAR sensor, though any suitable optical sensor that generates image data including a representation of installed equipment can be used. The image data is segmented as previously described such that each segment corresponds to a part of the installed equipment. Such segmentation may be an internal function or feature of the optical sensor 208, may be provided by the logic unit 210, or may be provided by another device (not shown) external to the system that is communicatively connected to the system, such as by being in communication with the client 202 or the optical sensor 208. The image data thus includes a representation of the installed equipment including a configuration of the installed equipment, and each segment includes a representation of a part of the installed equipment including a configuration of such part. The logic unit 210 of the client device executes a plurality of classifiers each trained to determine a degree of correctness of a configuration of at least one part of an installed equipment as previously described.

The server device 200 includes or is constituted by a logic unit 204 such as a general purpose or dedicated computing or processing device that executes a rule engine 206. The rule engine 206 can be provided as a series of program code or firmware, or can be provided as a dedicated hardware rule engine for the provision and execution of rules. The rule engine 206 applies at least one rule to an output of each of the plurality of classifiers as previously described to generate an indication of a degree of correctness of the installation of equipment. In one arrangement, the rule engine 206 further identifies at least one part of the installed equipment having a configuration with a determined degree of correctness below a threshold degree of correctness based on the segmented image data. Such part or parts can be identified to an operative, such as via a communications interface of the system.

In one arrangement, the logic unit 204 of the server device includes or executes a comparator for comparing a configuration of each part of the equipment as indicated by the segmented image data with a predefined model configuration of the part to identify differences between the configuration of the part of the equipment as installed and the model configuration of the part. Such comparison can be performed for at least a subset of parts of the installed equipment, such as for only parts of the installed equipment determined to have a degree of correctness of configuration that is below a threshold degree of correctness. Such differences can be communicated to an operative to identify one or more parts of the installed equipment for which a configuration is not sufficiently correct.

While the logic unit 204 of the server device and the logic unit 210 of the client device are depicted as separate, it will be appreciated by those skilled in the art that such separation is optional and the logic units can be combined into a composite logic unit. Further, the client and server devices can be communicatively connected such as via a communications interface such as a wired, wireless, bus or other suitable interface.

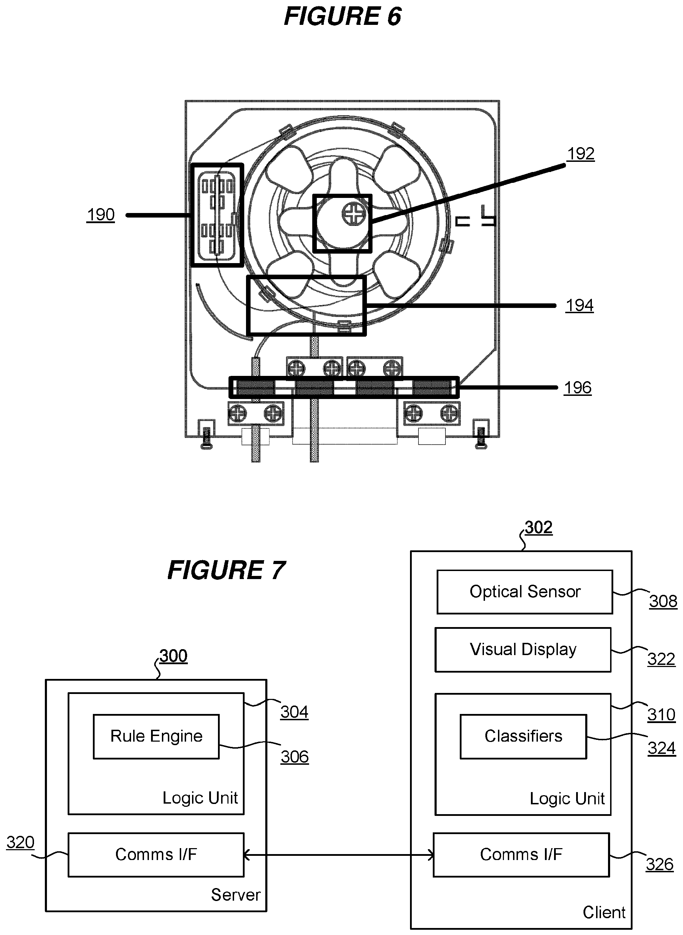

As previously described, image data of installed equipment such as a CSP 150 with cabling may be segmented in a number of different ways. Two exemplary segmentations will now be described. Figure 5 depicts a segmented image of a CSP 150 in accordance with an exemplary arrangement of the present invention. The image of Figure 5 is segmented using regular segmentation in which each segment is of regular shape and size such that segments of the image correspond to parts of the installed equipment. Parts of the installed equipment are thus provided in segments thus: rubber grommets are provided in segments E2, E3, E4 and E5; cable clamps are provided in segments F2, E3, E4 and F5; the fibre cradle is provided in segments B2 and C2; the splice is provided in segments B2 and C2; the fixing screw is provided in segment C4; and so on. Figure 6 depicts an alternative segmented image of a CSP 150 in accordance with an exemplary arrangement of the present invention. In the segmentation of Figure 6, specific parts of the equipment are included in specific segments. Thus, the rubber grommets are provided in a singular segment 196; the fibre cradle including splice is provided in segment 190; a part of the equipment indicating an orientation of the fibre is provided in segment 194; and the fixing screw is provided in segment 192. Notably, such segments may overlap and some parts of the image data may not be explicitly included within a segment. In one arrangement, such parts of the mage data not explicitly included within a segment may be define to constitute a segment of its own.

Figure 7 is a component diagram of an automated equipment installation verification system to automatically verify correctness of an installation of an item of installed equipment in accordance with an exemplary arrangement of the present invention. The arrangement of Figure 7 shares many features in common with the arrangement of Figure 4 and these will not be repeated here. The exemplary arrangement of Figure 7 shows a client 302 that may be provided to an installation operative performing an installation of equipment at a remote location of the installation, and a server 300 provided at a different location such as a data centre or office or the like. The client 302 and server 300 include communications interfaces 326 and 320 respectively to provide a communicative connection therebetween such as via a cellular data network and/or wired or wireless network. Vis the arrangement of Figure 4, the client further includes a visual display 322 such as a screen, indicator or other visual means, for providing the operative with information arising from the automated equipment verification system, such as indications of correctness of installation and/or particular parts of an installed equipment having a configuration that does not meet a threshold degree of correctness. The logic unit 310 of the client 310 further includes the classifiers 324, and alternatively the classifiers may be provided by the logic unit 304 of the server 300. An optical sensor 308 is depicted as part of the client device though it will be appreciated that the optical sensor, such as a camera, LiDAR or the like, may be provided as a separate device or component of a device such that image data generated by the optical sensor is communicable to the client device for processing by its logic unit 310, or communicable to the server device 304 for processing by its logic unit 304. In one example, the client device is a portable computing device such as a smartphone, tablet, laptop computer or the like. Thus, in use, the operative uses the optical sensor 308 to generate image data including a representation of installed equipment. The image data is segmented as previously described and the client device executes classifiers 324 to classify the segmented image data to determine a degree of correctness of a configuration of at least one part of the equipment. The classifier output is processed by a rule engine 306 of the server device to apply at least one rule to generate an indication of a degree of correctness of the installation of the equipment. The degree of correctness of the equipment, and in some arrangements, one or more individual parts of the equipment, is communicated to the client device 302 in order that it may be displayed on the visual display 322 to inform the operative.

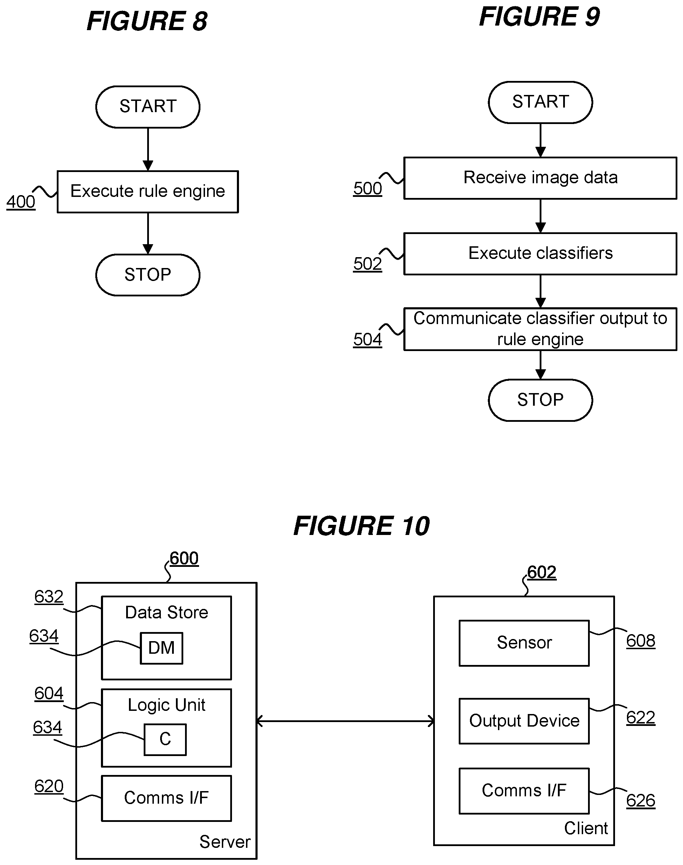

Figure 8 is a flowchart of an exemplary method of the logic unit 304 of the server of Figure 7 in accordance with an exemplary arrangement of the present invention. At step 400, the rule engine 206, 306 is executed to apply at least one rule to an output of each of the classifiers 324 to generate an indication of a degree of correctness of the installation of the equipment.

Figure 9 is a flowchart of an exemplary method of the logic unit 310 of the client of Figure 10 in accordance with an exemplary arrangement of the present invention. At step 500, the method receives image data including a representation of the installed equipment. At step 502, the classifiers are executed on the basis of the image data segmented into segments, each segment corresponding to part of the installed equipment. At step 504 the method communicates the classifier output to the rule engine 206, 306. In some arrangements, the method further includes outputting an indication of a degree of correctness of one or more of the installed equipment and/or one or more parts thereof to the operative via, for example, a visual display.

Complementary arrangements, systems and methods provide for the automated verification of each of a sequence of steps for the installation of an item of equipment, such as - but in no way limited to - a CSP 150 such as is described above, by an operative such as an installation operative or engineer. Thus, the verification occurs in a stepwise manner according to a series of steps required to install the equipment. The stepwise installation verification is performed on the basis of a defined digital model of the equipment for each step in the stepwise installation process, the digital model being stored in a data store. The digital model includes a model of the equipment at each of a series of steps in the installation process with reference to which representations of a corresponding step in the installation of the equipment can be compared to determine a degree of conformity of the equipment at a step in the installation with the digital model for that step. Thus, the digital model can include a series of models for at least a subset of the steps of the installation process, and for each step one or more models may be provided such as models corresponding to potential variations for each step. For example, the digital model can include, inter alia: one or more three dimensional models; one or more two dimensional models; one or more machine learning models such as trained classifiers; one or more metadata or descriptive models such as models defining a structure, arrangement, appearance or other features of installed and/or part-installed equipment; and other models as will be apparent to those skilled in the art. Notably, combinations of two or more of any such models may be employed. Further notably, whereas the digital model of the equipment is provided at each step of a stepwise installation process, individual parts of the model (which may themselves be considered a model *per se*) correspond to the equipment as part-installed during an installation process. The verification of steps of the installation of the equipment is performed based on one or more representations of the equipment such as the equipment part-installed at a current step of the stepwise installation process. The representation of the equipment at least indicates a configuration of the equipment such as by an optical, acoustic, thermal or other representation generated by a corresponding sensor. For example, the representation may be generated based on a sensor such as a camera, a 3D scanner, a LiDAR sensor, a sound sensor or detector, a thermal sensor, a pressure gauge or other sensor capable of generating such a representation indicating a configuration of the equipment. The representation of the equipment is compared with the digital model corresponding to a current step in the stepwise installation process to generate a degree of conformity of the equipment with the digital model at the current step. Such comparison may be based on comparison of image data where the digital model provides a depiction of equipment at the current step, such as a depiction derived from a 3D model that is adjusted to correspond to a depiction of the equipment during installation such as by adjusting a real or notional view of the 3D model to correspond to the representation of the equipment (e.g. by adjusting an angle, distance, scale and/or orientation of equipment as modelled in the digital model to correspond to an image of the part-installed equipment at a current step of installation) in order that an image comparison can be performed between an image representation of the equipment and an image derived from such 3D model. Alternatively, or additionally, such comparison may be based on processing the digital model for a current step of the stepwise installation to determine a degree of conformity with the digital model by the representation of the part-installed equipment, such as by processing one or more rules defined in the digital model, or applying the representation (or a derivative thereof) of the equipment to the digital model to process the representation to determine a degree of conformity of the equipment with the model. For example, where the digital model includes one or more classifiers or rulebased models, the representation of the equipment may be processed by such model to determine a degree of conformity. Subsequently, the degree of conformity for each of at least a subset of steps of the stepwise installation process can be communicated to the operative, such as by way of a device proximate with the operative, to indicate to the operative the degree of conformity with the digital model such as to identify installation steps that are not sufficiently in conformity so that corrective, remedial, repeat or other action can be taken by the operative. In one arrangement, the representation of the equipment is segmented into a plurality of partial representations, each partial representation corresponding to a part of the equipment. With such a segmented representation, each partial representation is compared with a corresponding part of the digital model for a step in the stepwise installation process to identify one or more parts of the equipment for which a degree of conformity of the part is below a threshold degree of conformity. In such an arrangement, one or more parts of the equipment for which conformity is below a threshold degree can be identified, and an indication of such one or more parts can be communicated to an installation operative to inform the operative more specifically where the part-installed equipment requires rectification, remediation or repeat.

Figure 10 is a component diagram of an automated equipment installation verification system to automatically verify correctness of each of a sequence of installation steps for the installation of an item of equipment in accordance with an exemplary arrangement of the present invention. The system of Figure 10 is depicted as a client/server system having a server device 600 and a client device 602. It will be appreciated that such a separation of the system into multiple devices is purely exemplary and a singular or multiplicity of devices may be used.

The client device 602 includes, or has associated, at least one sensor 608 for generating data including a representation of equipment indicating a configuration of the equipment at a current step in a stepwise installation process. For example, the sensor 608 can be any of the sensors described above. In one arrangement, the sensor 608, or a postprocessor of data generated by the sensor 608, can generate a segmented representation including a plurality of partial representations of equipment, each partial representation corresponding to a part of the equipment. The client device 602 further includes an output device 622 such as a screen, indicator, printer, audio output or other output means, for providing an operative with information arising from the automated equipment verification system, such as indications of a degree of conformity of equipment at a step of the stepwise installation process and/or particular parts of an installed equipment having a configuration that does not meet a threshold degree of correctness at a step of the installation process. The client 602 further includes a communications interface 626 for effecting communication between the client 602 and other devices such as the server 600. Such communications can be effected via wired, wireless, bus or other suitable communications interface 626.

The server device 200 includes or is constituted by a logic unit 604 such as a general purpose or dedicated computing or processing device. The server device 200 has associated a data store 632 such as a volatile or non-volatile, local or remote (e.g. cloud-based), physical or virtualised storage medium including a digital model 634 of equipment at each step of the stepwise installation process. While the data store 632 is depicted as being part of the server device 600, it will be appreciated that the data store 632 could be located elsewhere and accessible to the logic unit 604 of the server device 600. The logic unit is operable to execute a comparator 634 as a hardware, software, firmware or combination unit that compares a representation of equipment at a step of the stepwise installation process with the digital model 634 of the equipment corresponding to the step, such that the logic unit 604 generates a degree of conformity of the equipment as indicated by the representation of the equipment provided by the sensor 608 with the digital model 634. The server 600 further includes a communications interface 620 for effecting communication between the server 600 and the client 602, the communications interface 620 being comparable to that of the client 602.

In use, the sensor 608 generates a representation of equipment indication a configuration of the equipment at a current step in the stepwise installation process or communication via the client's communications interface 626 to the server 600, whereby the logic unit 604 compares the representation of the equipment with a digital model 634 corresponding to the current step to determine a degree of conformity of the equipment at the current step. The degree of conformity or information about the degree of conformity can be communicated to an operative via the output device 622. For example, a failure of the degree of conformity to meet a threshold degree can be indicated via the output device 622. In some arrangements, a particular step of the stepwise installation process for which a degree of conformity fails to meet a threshold degree can be identified via the output device 622. In this way, the installation steps by the operative are automatically verified for conformity with a model of installation steps and an incorrect or non-conformant configuration of the equipment at an installation step can be indicated to the operative for taking remedial, corrective, repeated or other measures.

In some arrangements, the comparator 634 is further operable to determine, based on a comparison of the data representation of the equipment and the digital model, a current step of the installation process. For example, a current step may be determined by comparing an image data representation with an image derived from the digital model.

As previously described, in some arrangements the representation of the equipment is segmented into a plurality of partial representations, each partial representation corresponding to a part of the equipment. In such an arrangement, the comparator 634 compares each partial representation with a corresponding part in the digital model to identify one or more parts of the equipment for which a degree of conformity of the part is below a threshold degree of conformity. In such an arrangement, an identification of such parts can be communicated to the client 602 via the communications interfaces 620, 626 to indicate to an operative via the output device 622 such parts.

In some arrangements, the digital model 634 is a machine learning model trained to determine a degree of conformity of a representation of the equipment. For example, the digital model 634 can include one or more of: a decision tree classifier; a naive Bayes classifier; a K-nearest neighbour classifier; a support vector machine; and an artificial neural network.

In some arrangements, where the equipment or part of the equipment is determined to have a degree of conformity below a threshold degree of conformity at a current step in the installation process, an indication of a correct configuration of the equipment at the current step can be generated, such as by the logic unit 604, for communication to the operative via the output device 622 to inform the operative of a correct configuration. Additionally or alternatively, such indication may include an identification of one or more differences between such correct configuration and the actual configuration of the equipment at the current step of the installation process.

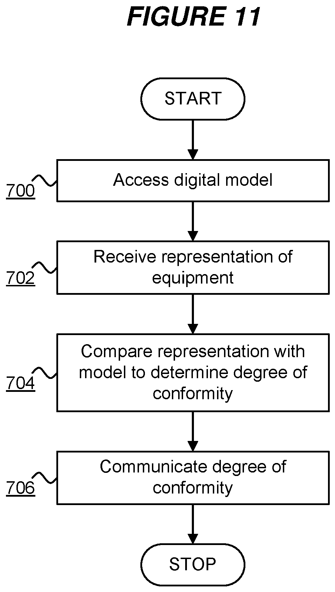

Figure 11 is a flowchart of an exemplary method of the logic unit 604 of Figure 10 in accordance with an exemplary arrangement of the present invention. At step 700, the method accesses the digital model 634. At step 702 the method receives a representation of the equipment being installed including indication of a configuration of the equipment. At step 704 the method compares the representation of the equipment with the digital model to determine a degree of conformity of a configuration of the equipment with the digital mode. At step 706, information about the degree of conformity is communicated to an operative such as a failure of the degree of conformity to meet a threshold degree.

Complementary arrangements, systems and methods provide for the automated verification of installation actions of an operative installing an item of equipment, such as - but in no way limited to - a CSP 150 such as is described above, by an operative such as an installation operative or engineer. The verification of installation actions performed by an operative can be undertaken either stepwise during installation, or retrospectively subsequent to installation. In either case, the verification of an installation action constitutes the verification of one or more actions in a sequence of stepwise actions for the installation of the equipment. Physical acts performed by the operative can include: use of a tool with the equipment such as an implement to perform actions on the equipment or in respect of the installation of the equipment; the manipulation of the equipment, a component of the equipment, or one or more elements to be configured, installed, collocated, included or otherwise associated with one or more components to constitute the equipment; the adjustment of the equipment or one or more components or elements thereof; the aggregation, bringing together, attaching or detaching, or applying or disapplying components or elements of the equipment; and other physical acts including the reversal, repeat, redo or re-emphasis of such acts. The one or more physical acts of the operative are sensed by at least one sensor as the operative undertakes at least one step of installation of the equipment. For example, the sensor can include an optical sensor, a sound sensor, a pressure gauge, a LiDAR sensor, a thermal sensor or other suitable sensor. The sensor generates data corresponding to each physical act of the that corresponds to the physical act. For example, the sensor may generate image data, video data or sound data corresponding to the performance of a physical act by the operative. The generated data is processed by at least one classifier to determine a degree of correctness of the act of the operative. The at least one classifier can include a machine learning classifier including, for example, inter alia, one or more of: a decision tree classifier; a naive Bayes classifier; a K-nearest neighbour classifier; a support vector machine; and an artificial neural network. The classifier is trained to determine a degree of correctness of an act of the operative based on the generated data corresponding to the act. For example, an artificial neural network classifier can be trained using a supervised method to classify image or video data corresponding to the act between two or more classes of correctness based on training data including a corresponding exemplary action in a sequence of stepwise actions for the installation of the equipment, each such exemplary action being associated with an indication of correctness from the two or more classes of correctness. Thus, in use, the classifier applied to the data corresponding to the operative's acts classifies the data to a degree of correctness, so determining a degree of correctness of an installation action performed by the operative. Subsequently, the output of the classifier for each of multiple acts in a sequence of action is processed by a rule engine such as a software, firmware or hardware rule engine operating with a logic unit to apply at least one rule to the classifier output. On the basis of the at least one rule, an indication of a degree of correctness of an operative's physical acts is generated. Thus, the degree of correctness of the installation actions performed by an operative is determined based on the indications of degrees of correctness for each of a plurality of physical acts determined by the classifiers. The degree of correctness of operatives actions can be a continuous measure of degree, such as a numeric scale, a Boolean indication of correctness such as "true" or "false" indication, an enumerated set of classes of correctness, or other suitable indications of a degree of correctness. Rules applied by the rule engine can include: threshold-based rules such as rules for combining degrees of correctness for each of a plurality of acts of the operative determined by the classifier, such as by summation, combination or other aggregation, to compare with one or more thresholds to determine a degree of correctness of a sequence of acts performed by the operative; a logical rule such as a series of one or more conditions of a decision tree operable on the basis of the degree of correctness of each of the physical acts to determine an appropriate degree of correctness for a sequence of acts performed by the operative; and other suitable rules. The degree of correctness of the operative's acts determined with the rule engine serves to verify the correctness of the installation of the installed equipment and in this way the installation is automatically verified. In one arrangement, at least one act of the operative for which a degree of correctness is determined to be below a threshold degree is identified. Such at least one act can be communicated to the operative to inform the operatives such as to prompt the operative to redo, repeat, undo, or adjust the act. In one arrangement, a predefined model act of the operative is provided for at least a subset of the acts. Such a predefined model act can be compared with sensed data generated to correspond to an act of the operative so that, where an act of the operative is determined to have a degree of correctness falling below a predefined threshold degree, differences between the predefined model act and the sensed act can be identified and communicated to the operative to inform improvement, adjustment or change to the operative's action(s).

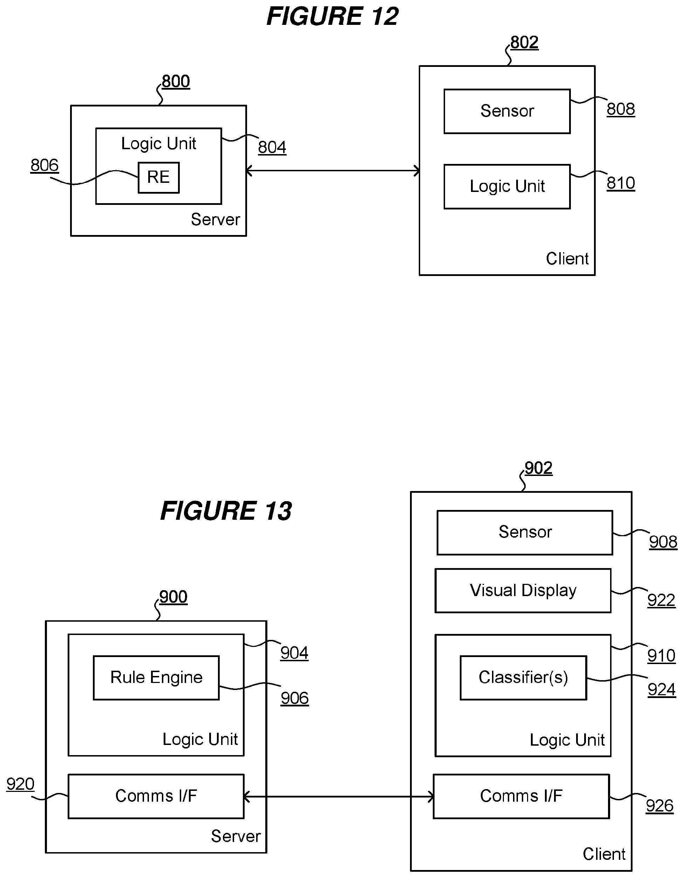

Figure 12 is a component diagram of an automated equipment installation verification system to automatically verify correctness of installation actions of an operative installing an item of equipment in accordance with an exemplary arrangement of the present invention. The system is depicted as a client/server system having a server device 800 and a client device 802. It will be appreciated that such a separation of the system into multiple devices is purely exemplary and a singular or multiplicity of devices may be used.

The client device 802 includes or is constituted by a logic unit 810 such as a general purpose or dedicated computing or processing device. The client device 802 further includes, or has associated, at least one sensor 808 for sensing physical acts performed by an operative installing equipment. The sensor 808 thus generates data corresponding to each act a sequence of acts performed by the operative, such as by way of a sensor as described above. The logic unit 810 of the client device executes at least one classifier trained to determine a degree of correctness of an act of the operative based on the data corresponding to the act provided by the sensor 808. In one arrangement, the logic unit 810 is further operable communicate an output of the classifier to a rule engine 806 of a server device 800.

The server device 800 includes or is constituted by a logic unit 804 such as a general purpose or dedicated computing or processing device that executes a rule engine 806. The rule engine 806 can be provided as a series of program code or firmware, or can be provided as a dedicated hardware rule engine for the provision and execution of rules. The rule engine 806 applies at least one rule to an output of the at least one classifier for each of a sequence actions of the operative in the installation of the equipment, as previously described, to generate an indication of a degree of correctness of the actions performed by the operative.

While the logic unit 804 of the server device and the logic unit 810 of the client device are depicted as separate, it will be appreciated by those skilled in the art that such separation is optional and the logic units can be combined into a composite logic unit. Further, the client 802 and server 800 devices can be communicatively connected such as via a communications interface such as a wired, wireless, bus or other suitable interface.

Figure 13 is a component diagram of an automated equipment installation verification system to automatically verify correctness of installation actions of an operative installing an item of equipment in accordance with an exemplary arrangement of the present invention. The arrangement of Figure 13 shares many features in common with the arrangement of Figure 12 and these will not be repeated here. The exemplary arrangement of Figure 13 shows a client 902 that may be provided to an installation operative performing an installation of equipment at a remote location of the installation, and a server 900 provided at a different location such as a data centre or office or the like. The client 902 and server 900 include communications interfaces 926 and 920 respectively to provide a communicative connection therebetween such as via a cellular data network and/or wired or wireless network. Vis the arrangement of Figure 13, the client further includes a visual display 922 such as a screen, indicator or other visual means, for providing the operative with information arising from the automated equipment installation verification system, such as indications of correctness of one or more installation actions and/or particular installation actions having degree of correctness that does not meet a threshold degree of correctness. The logic unit 310 of the client 310 further includes at least one classifier 924, and alternatively the classifier may be provided by the logic unit 904 of the server 900. A sensor 908 is depicted as part of the client device 902 though it will be appreciated that the sensor 908, such as a camera, LiDAR sensor, sound sensor or the like, may be provided as a separate device or component of a device such that data generated by the sensor 908 corresponding to an act of the operative is communicable to the client device 902 for processing by its logic unit 910, or communicable to the server device 900 for processing by its logic unit 904. In one example, the client device 902 is a portable computing device such as a smartphone, tablet, laptop computer or the like. Thus, in use, the sensor 908 generates data characterising each of a set of acts of the operative in the installation of the equipment. The client device executes the classifier 924 to classify the data to determine a degree of correctness of an act of the operative in the sequence of stepwise actions. The classifier output for each of a sequence of acts of the operative is processed by a rule engine 906 of the server device 900 to apply at least one rule to generate an indication of a degree of correctness of the sequence of acts. The degree of correctness of the sequence of acts of the operative, and in some arrangements, one or more individual acts of the operative, is communicated to the client device 902 in order that it may be displayed on the visual display 922 to inform the operative.

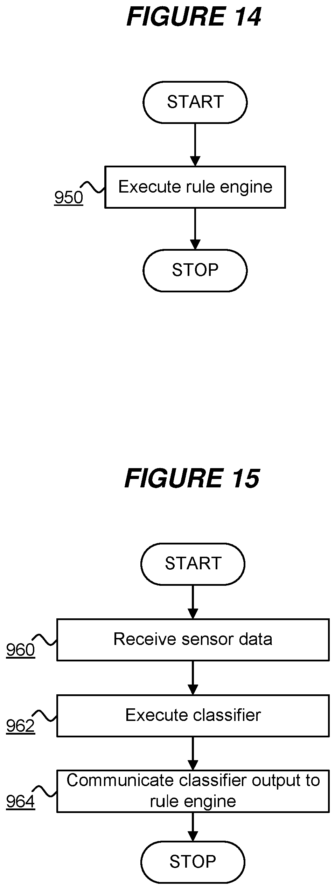

Figure 14 is a flowchart of an exemplary method of the logic unit 904 of the server of Figure 13 in accordance with an exemplary arrangement of the present invention. At step 950, the rule engine 806, 906 is executed to apply at least one rule to an output of the classifier 924 to generate an indication of a degree of correctness of the sequence of acts performed by the operative.

Figure 15 is a flowchart of an exemplary method of the logic unit 910 of the client of Figure 13 in accordance with an exemplary arrangement of the present invention. At step 960, the method receives sensor data corresponding to each of one or more physical acts performed by the operative installing the equipment. At step 962, the classifier 924 is executed on the basis of the sensor data for a physical act. At step 964 the method communicates the classifier output to the rule engine 806, 906. In some arrangements, the method further includes outputting an indication of a degree of correctness of the operatives actions, or one or more of operatives acts, to the operative via, for example, a visual display 922.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, such a computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

## Claims

1. An automated equipment installation verification system to automatically verify correctness of an installation of an item of installed equipment, the system comprising:
a logic unit (204) that executes a rule engine (206) to apply at least one rule to an output of each of a plurality of classifiers to generate an indication of a degree of correctness of the installation of the equipment, each of the classifiers being trained to determine a degree of correctness of a configuration of at least part of the equipment based on image data, the image data including a representation of the equipment and being segmented such that each segment of the image data corresponds to a part of the installed equipment.

2. The system of claim 1 wherein the rule engine (206) further identifies at least one part of the equipment for which the degree of correctness of the configuration of the part is below a threshold degree of correctness.

3. The system of any preceding claim further comprising a communications interface, wherein the degree of correctness is communicated via the communications interface to inform an operative.

4. The system of claim 2 further comprising a communications interface, wherein the at least one part of the equipment for which the degree of correctness of the configuration of the part is below the threshold degree of correctness is communicated via the communications interface.

5. The system of claim 2 wherein the logic unit (204) further compares a configuration of each of the at least one part of the equipment for which the degree of correctness of the configuration of the part is below the threshold degree of correctness, and a predefined model configuration of the part, the comparison identifying differences therebetween.

6. The system of claim 5 further comprising a communications interface, wherein identified differences are communicated via the communications interface.

7. The system of any preceding claim, further comprising:
at least one optical sensor (208) generating the image data including a representation of the installed equipment;
wherein the logic unit (210) further communicates the output of each of the classifiers to the rule engine (206) to generate the indication of a degree of correctness of the installation of the equipment from the rule engine (206).

8. The system of any preceding claim wherein the logic unit (204) includes one or more computer systems.

9. The system of any preceding claim wherein the image data includes one or more of: a digital image; video; and a three-dimensional scan.

10. A method to automatically verify correctness of an installation of an item of installed equipment, the method comprising:
executing a rule engine (206) to apply at least one rule to an output of each of a plurality of classifiers to generate an indication of a degree of correctness of the installation of the equipment, each of the classifiers being trained to determine a degree of correctness of a configuration of at least part of the equipment based on image data, the image data including a representation of the equipment and being segmented such that each segment of the image data corresponds to a part of the installed equipment.

11. The method of claim 10, the method comprising:
receiving the image data including the representation of the installed equipment; and
executing the plurality of classifiers;.

12. A computer program comprising instructions which, when the program is executed by a computer, cause the computer to carry out the steps of a method as claimed in claim 10 or 11.

## Patentansprüche

1. Automatisiertes Ausrüstungsinstallations-Verifikationssystem zum automatischen Verifizieren der Korrektheit einer Installation eines Elements einer installierten Ausrüstung, wobei das System Folgendes umfasst:
eine Logikeinheit (204), die eine Regel-Engine (206) ausführt, um mindestens eine Regel auf eine Ausgabe von jedem einer Mehrzahl von Klassifizierern anzuwenden, um eine Angabe eines Grads an Korrektheit der Installation der Ausrüstung zu erzeugen, wobei jeder der Klassifizierer dazu trainiert ist, einen Grad an Korrektheit einer Konfiguration mindestens eines Teils der Ausrüstung basierend auf Bilddaten zu bestimmen, wobei die Bilddaten eine Darstellung der Ausrüstung beinhalten und so segmentiert sind, dass jedes Segment der Bilddaten einem Teil der installierten Ausrüstung entspricht.

2. System nach Anspruch 1, wobei die Regel-Engine (206) ferner mindestens einen Teil der Ausrüstung identifiziert, bei dem der Grad an Korrektheit der Konfiguration des Teils unterhalb eines Schwellengrads an Korrektheit liegt.

3. System nach einem der vorhergehenden Ansprüche, das ferner eine Kommunikationsschnittstelle umfasst, wobei der Grad an Korrektheit über die Kommunikationsschnittstelle kommuniziert wird, um eine Bedienperson zu informieren.

4. System nach Anspruch 2, das ferner eine Kommunikationsschnittstelle umfasst, wobei der mindestens eine Teil der Ausrüstung, bei dem der Grad an Korrektheit der Konfiguration des Teils unter dem Schwellengrad an Korrektheit liegt, über die Kommunikationsschnittstelle kommuniziert wird.

5. System nach Anspruch 2, wobei die Logikeinheit (204) ferner eine Konfiguration jedes des mindestens einen Teils der Ausrüstung, bei dem der Grad an Korrektheit der Konfiguration des Teils unter dem Schwellengrad an Korrektheit liegt, und eine vordefinierte Modellkonfiguration des Teils vergleicht, wobei der Vergleich Unterschiede zwischen diesen identifiziert.

6. System nach Anspruch 5, das ferner eine Kommunikationsschnittstelle umfasst, wobei identifizierte Unterschiede über die Kommunikationsschnittstelle kommuniziert werden.

7. System nach einem der vorhergehenden Ansprüche, das ferner Folgendes umfasst:
mindestens einen optischen Sensor (208), der die Bilddaten erzeugt, die eine Darstellung der installierten Ausrüstung beinhalten;
wobei die Logikeinheit (210) ferner die Ausgabe jedes der Klassifizierer an die Regel-Engine (206) kommuniziert, um die Angabe eines Grads an Korrektheit der Installation der Ausrüstung von der Regel-Engine (206) zu erzeugen.

8. System nach einem der vorhergehenden Ansprüche, wobei die Logikeinheit (204) ein oder mehrere Computersysteme beinhaltet.

9. System nach einem der vorhergehenden Ansprüche, wobei die Bilddaten eines oder mehrere von Folgendem beinhalten: ein digitales Bild; Video; und eine dreidimensionale Abtastung.

10. Verfahren zum automatischen Verifizieren einer Korrektheit einer Installation eines Elements einer installierten Ausrüstung, wobei das Verfahren Folgendes umfasst:
Ausführen einer Regel-Engine (206), um mindestens eine Regel auf eine Ausgabe von jedem einer Mehrzahl von Klassifizierern anzuwenden, um eine Angabe eines Grads an Korrektheit der Installation der Ausrüstung zu erzeugen, wobei jeder der Klassifizierer dazu trainiert ist, einen Grad an Korrektheit einer Konfiguration mindestens eines Teils der Ausrüstung basierend auf Bilddaten zu bestimmen, wobei die Bilddaten eine Darstellung der Ausrüstung beinhalten und so segmentiert sind, dass jedes Segment der Bilddaten einem Teil der installierten Ausrüstung entspricht.

11. Verfahren nach Anspruch 10, wobei das Verfahren Folgendes umfasst:
Empfangen der Bilddaten, die die Darstellung der installierten Ausrüstung beinhalten; und
Ausführen der Mehrzahl von Klassifizierern;.

12. Computerprogramm, das Anweisungen umfasst, die, wenn das Programm durch einen Computer ausgeführt wird, den Computer veranlassen, die Schritte eines Verfahrens nach Anspruch 10 oder 11 auszuführen.

## Revendications

1. Système automatisé de vérification de l'installation d'équipements pour vérifier automatiquement la justesse de l'installation d'un élément d'un équipement installé, le système comprenant : une unité logique (204) qui exécute un moteur de règles (206) pour appliquer au moins une règle à une sortie de chacun d'une pluralité de classificateurs pour générer une indication d'un degré de justesse de l'installation de l'équipement, chacun des classificateurs étant entraîné pour déterminer un degré de justesse d'une configuration d'au moins une partie de l'équipement à partir de données d'image, les données d'image comprenant une représentation de l'équipement et étant segmentées de sorte que chaque segment des données d'image corresponde à une partie de l'équipement installé.

2. Système selon la revendication 1, dans lequel le moteur de règles (206) identifie en outre au moins une partie de l'équipement pour laquelle le degré de justesse de la configuration de la partie est inférieur à un degré de justesse seuil.

3. Système selon l'une quelconque des revendications précédentes, comprenant en outre une interface de communication, où le degré de justesse est communiqué par l'intermédiaire de l'interface de communication pour informer un opérateur.

4. Système selon la revendication 2, comprenant en outre une interface de communication, où l'au moins une partie de l'équipement pour laquelle le degré de justesse de la configuration de la partie est inférieur au degré de justesse seuil est communiquée par l'intermédiaire de l'interface de communication.

5. Système selon la revendication 2, dans lequel l'unité logique (204) compare en outre une configuration de chacune de l'au moins une partie de l'équipement pour laquelle le degré de justesse de la configuration de la partie est inférieur au degré de justesse seuil, et une configuration de modèle prédéfinie de la partie, la comparaison identifiant les différences entre elles.

6. Système selon la revendication 5, comprenant en outre une interface de communication, dans lequel des différences identifiées sont communiquées par l'intermédiaire de l'interface de communication.

7. Système selon l'une quelconque des revendications précédentes, comprenant en outre :
au moins un capteur optique (208) générant les données d'image comportant une représentation des équipements installés ;
où l'unité logique (210) communique en outre la sortie de chacun des classificateurs au moteur de règles (206) pour générer l'indication d'un degré de justesse de l'installation de l'équipement à partir du moteur de règles (206).

8. Système selon l'une quelconque des revendications précédentes, dans lequel l'unité logique (204) comprend un ou plusieurs systèmes informatiques.

9. Système selon l'une quelconque des revendications précédentes, dans lequel les données d'image comprennent un ou plusieurs éléments parmi : une image numérique ; une vidéo ; et un balayage tridimensionnel.

10. Procédé de vérification automatique de la justesse d'une installation d'un élément d'un équipement installé, le procédé comprenant l'étape suivante :
exécuter un moteur de règles (206) pour appliquer au moins une règle à une sortie de chacun d'une pluralité de classificateurs pour générer une indication d'un degré de justesse de l'installation de l'équipement, chacun des classificateurs étant entraîné pour déterminer un degré de justesse d'une configuration d'au moins une partie de l'équipement à partir de données d'image, les données d'image comprenant une représentation de l'équipement et étant segmentées de sorte que chaque segment des données d'image corresponde à une partie de l'équipement installé.

11. Procédé selon la revendication 10, le procédé comprenant les étapes suivantes :
recevoir les données d'image, y compris la représentation de l'équipement installé ; et
exécuter la pluralité de classificateurs.

12. Programme d'ordinateur comprenant des instructions qui, lorsque le programme est exécuté par un ordinateur, amènent l'ordinateur à exécuter les étapes d'un procédé selon les revendications 10 ou 11.
